# EUROPÄISCHE PATENTSCHRIFT

(11) **EP 3 256 738 B1**
(45) Veröffentlichungstag und Bekanntmachung des Hinweises auf die Patenterteilung: **09.09.2020**
(21) Anmeldenummer: 16703332.3
(22) Anmeldetag: 09.02.2016
(51) Int. Cl.: F04D 29/02, B22F 3/105, F04D 29/40, B22F 5/10, F04D 29/22

(54) **STRÖMUNGSFÜHRENDES BAUTEIL**
FLOW-CONDUCTING COMPONENT
COMPOSANT GUIDANT L'ÉCOULEMENT

(30) Priorität: 11.02.2015 DE 102015202417
(43) Veröffentlichungstag der Anmeldung: 20.12.2017
(73) Patentinhaber: KSB SE & Co. KGaA, 67227 Frankenthal (DE)
(72) Erfinder: BÖHM, Alexander, 67227 Frankenthal (DE); RAUNER, Holger, 67227 Frankenthal (DE)
(86) Internationale Anmeldenummer: PCT/EP2016/052706
(87) Internationale Veröffentlichungsnummer: WO 2016/128388

(56) Entgegenhaltungen:
- EP-A1- 2 584 146
- EP-A1- 2 737 965
- EP-A2- 1 995 411
- CN-A- 101 391 302
- US-A1- 2013 108 460
- US-A1- 2014 099 476
- US-A1- 2015 003 997

## Beschreibung

Die Erfindung betrifft ein strömungsführendes Bauteil mit mindestens einem Funktionsbereich zum Kontakt mit einem strömenden Medium und mindestens einem Funktionsbereich mit tragenden Eigenschaften.

Bei solchen strömungsführenden Bauteilen kann es sich um Teile von Kreiselpumpen, beispielsweise Laufräder oder Pumpengehäuse bzw. um Teile von Armaturen, beispielsweise Absperrkörper oder Ventilgehäuse, handeln.

Ein Laufrad muss sowohl tragende Eigenschaften haben, da es im Gehäuse der Kreiselpumpe angeordnet ist und von einer Welle angetrieben wird. Weiterhin müssen die Flächen des Laufrades, die mit dem zu fördernden Medium in Kontakt kommen, insbesondere die Laufradkanten, besonders verschleißresistent sein. Dies ist vor allem dann der Fall, wenn das Laufrad zum Fördern von feststoffhaltigen Medien eingesetzt wird. Feststoffpartikel führen zu einem Verschleiß am Laufrad. Auch muss das Laufrad beständig gegen eventuell auftretende Kavitation sein.

Dabei soll der Funktionsbereich mit den tragenden Eigenschaften eine hohe Festigkeit und eine geringe Sprödigkeit aufweisen. Dagegen Funktionsbereiche des Laufrades, die mit dem zu fördernden Medium in Kontakt kommen und daher abrasiv beansprucht werden, aus einem harten, verschleißbeständigen Werkstoff ausgeführt sein.

Bei herkömmlichen Laufrädern wird dies beispielsweise durch Beschichtungen gelöst, dabei wird der Funktionsbereich des Laufrades mit den tragenden Eigenschaften aus einem Werkstoff mit einer geringen Sprödigkeit bei hoher Festigkeit hergestellt. Auf diesem Funktionsbereich wird dann eine Beschichtung aus einem anderem chemischen Material aufgetragen, beispielsweise durch Stellitieren. Damit sind erhebliche Kosten, ein hoher Aufwand und eine eingeschränkte Recycelbarkeit verbunden.

In der DE 37 31 161 A1 wird ein Kreiselpumpenlaufrad beschrieben, das aus mehreren Blechteilen zusammengesetzt ist. Zur Erzielung einer steifen Konstruktion sind die energieübertragenden Schaufeln ausschließlich an der kraftübertragenden Deckscheibe befestigt. Den Eintrittsbereich des Laufrades bildet ein Saugmund, welcher als Einzelteil ausgebildet ist. Der Saugmund überdeckt die Schaufelanfänge. Eine die Schaufelkanäle abdeckende schaufellose Deckscheibe ist zwischen dem Laufradaustritt und dem maximalen Durchmesser des Saugmundes an den Schaufeln befestigt.

Die DE 40 31 936 A1 betrifft eine mehrteilige und aus unterschiedlichen Materialien bestehende Leiteinrichtung für Kreiselpumpen. Entsprechend der zum Einsatz kommenden Materialien ergeben sich bei Wärmebelastungen unterschiedliche Ausdehnungskoeffizienten. Von den in radialer Richtung wirksamen Passungsstellen der Leiteinrichtung trägt in Abhängigkeit der jeweiligen Temperatur immer nur eine Passungsstelle. Im kalten Betriebszustand ist es die auf kleinerem Durchmesser befindliche Passungsstelle, während es im warmen Betriebszustand die auf größerem Durchmesser befindliche Passungsstelle ist.

Die EP 2 584 146 A1 offenbart ein Verfahren zum Herstellen einer Hohlschaufel, wobei die Hohlschaufel an einem Bereich mit großen Schwingungen verdickt ausgeführt ist.

Die EP 1 995 411 A2 betrifft ein hohles Flügelprofil mit einer Druckflächen-Wand und einer Saugflächenwand, wobei zwischen den beiden Wänden Stege vorgesehen sind, die sich von der Druckflächen-Wand zur Saugflächenwand erstrecken.

In der CN 101 391 302 A wird ein Verfahren für eine heißisostatisch pressende Metallhülle beschrieben.

Die EP 2 737 965 A1 bezieht sich auf ein Verfahren zur Herstellung eines dreidimensionalen metallischen Gegenstands, wobei der Gegenstand durch sukzessives Aufbauen aus einem metallischen Grundmaterial mittels eines additiven Herstellungsverfahrens durch Abtasten mit einem Energiestrahl erzeugt wird. Dabei wird eine kontrollierte Kornorientierung in der Primär- und Sekundärrichtung des Gegenstandes hergestellt.

Aus der US 2014/0099476 A1 ist ein Verfahren zur additiven Herstellung von Gegenständen bekannt, wobei eine Vielzahl von Pulverschichten auf eine Arbeitsoberfläche gebracht werden, um eine Mehrfachpulverabscheidung zu bilden, die mindestens zwei benachbarte Pulverschichten umfasst. Gleichzeitig wird eine erste Laserenergie einer ersten Intensität auf eine erste Pulverschicht und eine zweite Laserenergie einer zweiten Laserintensität auf eine zweite Pulverschicht aufgebracht, um eine Schnittebene einer Mehrmaterialkomponente zu bilden.

Die US 2015/0003997 A1 beschreibt ein Verfahren zum Herstellen einer Komponente in einem Gasturbinentriebwerk, wobei die Komponente einen ersten Abschnitt, einen zweiten Abschnitt und einen funktional abgestuften Abschnitt umfasst, der zwischen dem ersten Abschnitt und dem zweiten Abschnitt angeordnet ist, wobei der erste Abschnitt unter Verwendung einer Gießtechnik gebildet wird, der funktional abgestufte Abschnitt auf dem ersten Abschnitt unter Verwendung einer additiven Herstellungstechnikerzeugt wird und der zweite Abschnitt auf dem funktional abgestuften Abschnitt unter Verwendung einer additiven Fertigungstechnik gebildet wird.

Die US2013/108460 offenbart ein Verfahren zur additiven Herstellung einer Komponente einer Gasturbine, wobei die Komponente aus einem Legierungsmaterial mit einer steuerbaren Korngrösse hergestellt wird und während des Praxiseinsatzes einer erwarteten Temperatur- und/oder Spannungs- und/oder Dehnungsverteilung ausgesetzt ist, die mit den geometrischen Koordinaten der Komponente variiert.

Aufgabe der Erfindung ist es, ein strömungsführendes Bauteil anzugeben, das Funktionsbereiche mit unterschiedlichen Eigenschaften aufweist. Dabei sollen die Flächen und Kanten des strömungsführenden Bauteils, die mit dem zu fördernden Medium in Kontakt kommen, besonders verschleißbeständig sein und auch einer auftretenden Kavitation widerstehen. Weiterhin soll das Bauteil Funktionsbereiche aufweisen, die besonders vorteilhafte tragende Eigenschaften aufweisen. Das strömungsführende Bauteil soll sich durch eine lange Lebensdauer und eine zuverlässige Betriebsweise auszeichnen. Weiterhin sollen Schäden durch unterschiedliche thermische Ausdehnungskoeffizienten vermieden werden. Weiterhin soll sich das Bauteil durch eine gute Recycelbarkeit auszeichnen.

Diese Aufgabe wird erfindungsgemäß durch ein strömungsführendes Bauteil mit den Merkmalen des Anspruchs 1 gelöst und durch ein Verfahren zur Herstellung eines solchen Bauteils mit den Merkmalen des Anspruchs 12. Bevorzugte Varianten sind in den Unteransprüchen ausgeführt.

Erfindungsgemäß werden die unterschiedlichen Funktionsbereiche des strömungsführenden Bauteils aus einem Aufbaumaterial durch aufeinanderfolgendes Schmelzen und Erstarren von Schichten mittels Strahlung hergestellt. Die unterschiedlichen Eigenschaften der einzelnen Funktionsbereiche des strömungsführenden Bauteils werden dabei durch Variationen der Strahlung generiert. Durch gezielte Steuerung der lokalen Wärmeeinbringung wird bereits beim Bau des strömungsführenden Bauteils eine Modifizierung der Werkstoffeigenschaften vorgenommen. Dadurch gelingt es, in einem Bauteil eines chemisch-homogenen Werkstoffs, Zonen und Gefüge unterschiedlicher Werkstoffzustände und damit unterschiedlicher Eigenschaften zu erzeugen.

Die erfindungsgemäßen strömungsführenden Bauteile weisen Funktionsbereiche auf deren Eigenschaften gezielt mittels generativer Fertigungsverfahren erzeugt sind. Es handelt sich um Bauteile, wie beispielsweise Laufräder von Kreiselpumpen oder Ventilsitze, die jeweils unterschiedliche Funktionsbereiche aufweisen, die auf den jeweiligen Einsatz in ihren spezifischen Eigenschaften optimiert sind. Die unterschiedlichen Funktionsbereiche des strömungsführenden Bauteils können unterschiedliche Festigkeiten, Verformbarkeiten, Verschleiß- beziehungsweise Kavitationsbeständigkeit aufweisen.

Zur Erzeugung des strömungsführenden Bauteils erfolgt eine gezielte Steuerung des Energieeintrags beim Aufbau des Bauteils zur Änderung der mechanischen Eigenschaften im Mikrovolumen des Werkstoffs. Auf eine nachträgliche Wärmebehandlung wird verzichtet, sodass die lokal auftretenden unterschiedlichen Werkstoffzustände erhalten bleiben. Aufwendige Beschichtungen sind ebenfalls nicht mehr erforderlich.

Vorzugsweise handelt es sich bei dem Aufbaumaterial zur Herstellung des strömungsführenden Bauteils um metallische Pulverteilchen. Bei einer Variante der Erfindung werden dazu eisenhaltige und/oder kobaldhaltige Pulverpartikel eingesetzt. Diese können Zusätze wie beispielsweise Chrom, Molybdän oder Nickel enthalten.

Der metallische Aufbauwerkstoff wird in Pulverform in einer dünnen Schicht auf eine Platte aufgebracht. Der pulverförmige Werkstoff wird mittels Strahlung an den jeweils gewünschten Stellen lokal vollständig umgeschmolzen und bildet nach der Erstarrung eine feste Materialschicht. Anschließend wird diese Grundplatte um den Betrag einer Schichtdicke abgesenkt und es wird erneut Pulver aufgetragen. Dieser Zyklus wird solange wiederholt, bis alle Schichten umgeschmolzen sind. Das fertige Bauteil wird vom überschüssigen Pulver gereinigt.

Als Strahlung kann beispielsweise ein Laserstrahl zum Einsatz kommen, welcher das strömungsführende Bauteil aus den einzelnen Pulverschichten generiert. Die Daten zur Führung des Laserstrahls werden auf Grundlage eines 3D-CAD-Körpers mittels einer Software erzeugt. Alternativ zu einem selektiven Laserschmelzen kann auch ein Elektronenstrahl (EBM) zum Einsatz kommen.

Das auf diese Weise generierte strömungsführende Bauteil hat erfindungsgemäß Funktionsbereiche mit unterschiedlichen mechanischen Eigenschaften. Obwohl das Aufbaumaterial zur Generierung des Bauteils chemisch identisch ist, werden erfindungsgemäß unterschiedliche metallische Gefüge durch eine Variation der Strahlung hergestellt. Dadurch entsteht ein einstückiges Bauteil mit unterschiedlichen metallischen Gefügen.

So unterscheidet sich der durch die Strahlung eingebrachte Energieeintrag in den Funktionsbereichen, die mit dem Medium in Kontakt kommen, beispielsweise den Flächen von den Funktionsbereichen, die vorwiegend tragende Eigenschaften haben. Dies kann beispielsweise durch Variation der Intensität der Strahlung erreicht werden. Auch die Scangeschwindigkeit, mit welcher der Laserstrahl über die einzelnen Pulverschichten verfährt, beeinflusst den Energieeintrag und somit das entstehende Gefüge.

Der Funktionsbereich, welcher tragende Eigenschaften hat, weist dabei erfindungsgemäß eine größere Festigkeit auf als der Funktionsbereich, welcher mit dem Medium in Kontakt kommt.

Im Unterschied dazu ist erfindungsgemäß die Härte des Funktionsbereiches, der mit dem Medium in Kontakt kommt, größer gegenüber der Härte des Funktionsbereiches, der tragende Eigenschaften hat.

Auch die Zähigkeit und/oder die Bruchdehnung der unterschiedlichen Funktionsbereiche kann durch den Energieeintrag über die Strahlung gezielt beeinflusst werden, um unterschiedliche Eigenschaften des strömungsführenden Bauteils zu erzeugen.

Dabei erweist es sich als vorteilhaft, wenn der Funktionsbereich mit den tragenden Eigenschaften eine Kerbschlagarbeit von mehr als 40 J hat und der Funktionsbereich, der mit dem strömenden Medium in Kontakt kommt, eine Kerbschlagarbeit von weniger als 10 J hat.

Weitere Merkmale und Vorteile der Erfindung ergeben sich aus der Beschreibung eines Ausführungsbeispiels anhand von Zeichnungen und aus den Zeichnungen selbst.

Dabei zeigt:
- Figur 1: eine Schnittdarstellung einer Kreiselpumpenanordnung,
- Figur 2: ein Laufrad einer Kreiselpumpe,
- Figur 3: eine Schnittdarstellung eines Ventils.

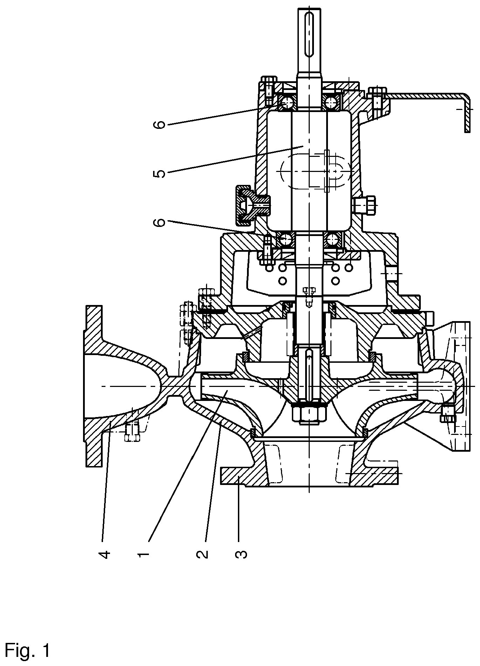

Figur 1 zeigt eine Schnittdarstellung durch eine Kreiselpumpenanordnung mit einem Laufrad 1, das in einem Gehäuse 2 angeordnet ist. Das Gehäuse weist eine Fluideingangsöffnung in Form eines Saugstutzens 3 und eine Fluidausgangsöffnung in Form eines Druckstutzens 4 auf. Bei dem Gehäuse 2 handelt es sich im Ausführungsbeispiel um ein Spiralgehäuse.

Das Laufrad 1 ist als Radiallaufrad ausgeführt und wird von einer Welle 5 angetrieben. Die Welle 5 wird von einem in dieser Darstellung nicht gezeigten Motor in Rotation versetzt. Die Welle 5 ist über Lager 6 abgestützt.

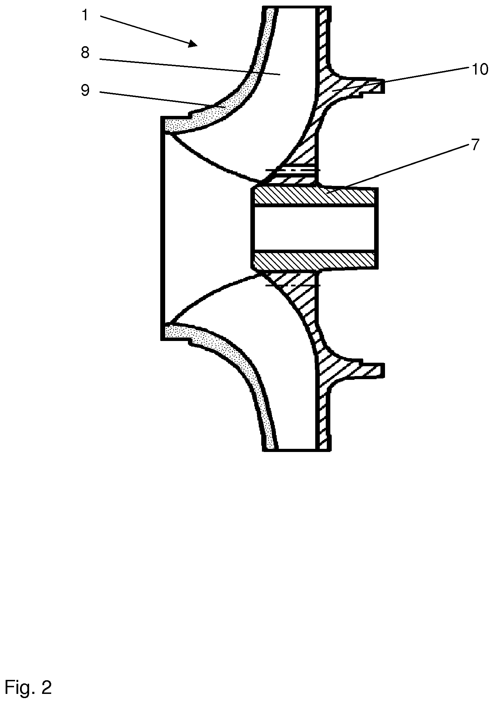

Figur 2 zeigt ein Laufrad 1, das mehrere Funktionsbereiche 7, 8, 9, 10 aufweist. Der Funktionsbereich 7, welcher die Nabe für die Welle 5 bildet, weist eine hohe Festigkeit und eine geringe Sprödigkeit auf.

Die Funktionsbereiche 8 des Laufrades, welche die Schaufeln bilden, sind dagegen mit einer großen Härte ausgestattet, sodass dieser Funktionsbereich besonders verschleiß- und kavitationsbeständig ist.

Im Ausführungsbeispiel weist das Laufrad die Funktionsbereiche 9 auf, welche die Deckscheibe bilden, sowie Funktionsbereiche 10, welche die Tragscheibe bilden. Jeder Funktionsbereich ist mit speziell auf diese Anwendung abgestimmten Eigenschaften ausgestattet.

Zur Generierung dieser Eigenschaften des Laufrades werden folgende Schritte nacheinander durchgeführt:
Zunächst wird ein Metallpulver eines eisenhaltigen Werkstoffs in einer dünnen Schicht auf einer Platte aufgebracht. Im Ausführungsbeispiel handelt es sich bei dem Pulver um ein Pulver eines Chrommolybdänstahls.

An den Stellen, an denen das Laufrad ausgebildet werden soll, wirkt ein Laserstrahl ein und verschmilzt die pulverförmigen Teilchen miteinander.

Nach einer Erstarrung entsteht eine Materialschicht der jeweiligen Funktionsbereiche des Laufrades 1.

Anschließend wird die Grundplatte um den Betrag der Schichtdicke abgesenkt und erneut Pulver aufgetragen.

Dieser Zyklus wird solange wiederholt, bis alle Schichten umgeschmolzen sind.

Das fertige Bauteil wird vom überschüssigen Pulver gereinigt.

Die 3D-Form des Laufrades ist in einer Software als Datensatz hinterlegt. Der Laserstrahl wird von einer Steuerungseinrichtung so verfahren, dass er die Form des Laufrades durch entsprechendes selektives Aufschmelzen der jeweiligen Bereiche auf der mit Pulverschicht beschichteten Platte aufschmilzt und diese Bereiche dann erstarren.

Erfindungsgemäß wird der Energieeintrag so variiert, dass unterschiedliche Funktionsbereiche 7, 8, 9, 10 mit unterschiedlichen Gefügen und unterschiedlichen spezifischen Eigenschaften entstehen, sodass ein Laufrad mit einer optimalen Zusammensetzung generiert wird. Bei dem Laufrad handelt es sich um ein einstückiges Bauteil.

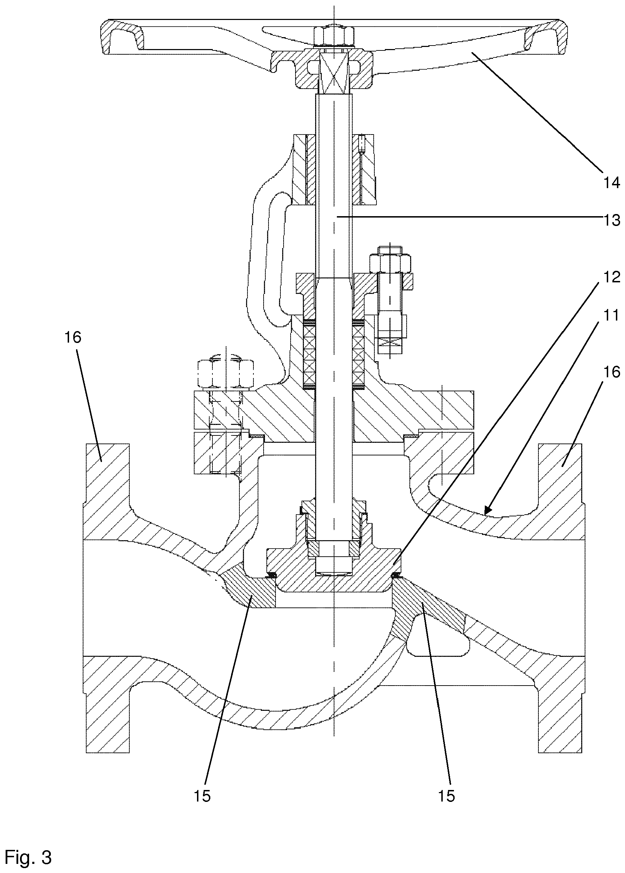

Figur 3 zeigt eine Schnittdarstellung eines Ventils. Das Ventil weist ein einstückiges Gehäuse 11 auf. In dem Gehäuse 11 ist ein Absperrkörper 12 angeordnet, der über eine Spindel 13 mittels eines Antriebs 14 in vertikaler Richtung verschoben werden kann.

Der Funktionsbereich 15 des einstückigen Gehäuses 11, der den Ventilsitz bildet, weist eine große Härte auf. Der Funktionsbereich 16 des einstückigen Gehäuses 11, der in Fig. 3 als Anschlusselement in Form eines Flansches ausgebildet ist, weist eine hohe Zugfestigkeit auf.

## Patentansprüche

1. Strömungsführendes Bauteil mit mindestens einem Funktionsbereich (8), zum Kontakt mit einem strömenden Medium und mindestens einem Funktionsbereich (7) mit tragenden Eigenschaften,
wobei die Funktionsbereiche (7, 8, 9, 10, 15, 16) aus einem Aufbaumaterial durch aufeinanderfolgendes Verfestigen von Schichten mittels Strahlung hergestellt sind und unterschiedliche Eigenschaften der Funktionsbereiche (7, 8, 9, 10, 11, 15, 16) durch Variation der Strahlung generiert sind, wobei das Aufbaumaterial der Funktionsbereiche (7, 8, 9, 10, 15, 16) in seiner chemischen Zusammensetzung identisch ist, **dadurch gekennzeichnet, dass** die Funktionsbereiche (7, 16) mit tragenden Eigenschaften eine größere Festigkeit als die mit dem Medium in Kontakt kommenden Funktionsbereiche (8, 9, 10, 15) aufweisen, und die Härte der mit dem Medium in Kontakt kommenden Funktionsbereiche (8, 9, 10, 15) größer als die Härte der Funktionsbereiche (7, 16) mit tragenden Eigenschaften ist

2. Strömungsführendes Bauteil nach Anspruch 1, **dadurch gekennzeichnet, dass** das Aufbaumaterial metallische Pulverteilchen umfasst.

3. Strömungsführendes Bauteil nach einem der Ansprüche 1 bis 3, **dadurch gekennzeichnet, dass** das Aufbaumaterial niedriglegierte und/oder hochlegierte Stahlpulverteilchen umfasst.

4. Strömungsführendes Bauteil nach einem der Ansprüche 1 bis 4, **dadurch gekennzeichnet, dass** die Funktionsbereiche (7, 8, 9, 10, 15, 16) ein einstückiges Bauteil bilden.

5. Strömungsführendes Bauteil nach einem der Ansprüche 1 bis 5, **dadurch gekennzeichnet, dass** unterschiedliche Eigenschaften der Funktionsbereiche (7, 8, 9, 10, 15, 16) durch Variation des Energieeintrags hergestellt sind.

6. Strömungsführendes Bauteil nach einem der Ansprüche 1 bis 6, **dadurch gekennzeichnet, dass** unterschiedliche Eigenschaften der Funktionsbereiche (7, 8, 9, 10, 15, 16) durch Variation der Intensität der Strahlung hergestellt sind.

7. Strömungsführendes Bauteil nach einem der Ansprüche 1 bis 7, **dadurch gekennzeichnet, dass** unterschiedliche Eigenschaften der Funktionsbereiche (7, 8, 9, 10, 15, 16) durch Variation einer Scangeschwindigkeit der Strahlung hergestellt sind.

8. Strömungsführendes Bauteil nach einem der Ansprüche 1 bis 8, **dadurch gekennzeichnet, dass** die Funktionsbereiche (7, 8, 9, 10, 15, 16) unterschiedliche Gefüge aufweisen.

9. Strömungsführendes Bauteil nach einem der Ansprüche 1 bis 8, **dadurch gekennzeichnet, dass** mindestens ein Funktionsbereich (7, 16) mit tragenden Eigenschaften eine Zugfestigkeit von mehr als 600 MPa oder mehr als 650 MPa oder mehr als 700 MPa aufweist und/oder mindestens ein mit dem Medium in Kontakt kommender Funktionsbereich (8, 9, 10, 15) eine Zugfestigkeit von weniger als 600 MPa oder weniger als 550 MPa oder weniger als 500 MPa aufweist.

10. Strömungsführendes Bauteil nach einem der Ansprüche 1 bis 9, **dadurch gekennzeichnet, dass** mindestens ein mit dem Medium in Kontakt kommender Funktionsbereich (8, 9, 10, 15) eine Härte in HB von mehr als 250 oder mehr als 300 oder mehr als 350 aufweist und/oder mindestens ein Funktionsbereich (7, 16) mit tragenden Eigenschaften eine Härte in HB von weniger als 250 oder weniger als 200 oder weniger als 150 aufweist.

11. Strömungsführendes Bauteil nach einem der Ansprüche 1 bis 10,
**dadurch gekennzeichnet, dass**
mindestens ein Funktionsbereich (7, 16) mit tragenden Eigenschaften eine Bruchdehnung von mehr als 10 % oder mehr als 15 % oder mehr als 20 % aufweist und/oder mindestens ein mit dem Medium in Kontakt kommender Funktionsbereich (8, 9, 10, 15) eine Bruchdehnung von weniger als 10% oder weniger als 5 % oder weniger als 1% aufweist.

12. Verfahren zur Herstellung eines strömungsführenden Bauteils nach einem der Ansprüche 1 bis 11, mit folgenden Schritten:
- Aufbringung einer Schicht eines Aufbaumaterials auf eine Platte,
- selektives Einwirken einer Strahlung auf die Schicht,
- gezielte Variation der Strahlung zur Erzeugung von Funktionsbereichen (7, 8, 9, 10) im Bauteil zur gezielten Generierung von Eigenschaften der Funktionsbereiche (7, 8, 9, 10).

## Claims

1. Flow-guiding component having at least one functional region (8) for contact with a flowing medium and having at least one functional region (7) with load-bearing properties, wherein the functional regions (7, 8, 9, 10, 15, 16) are produced from a construction material by successively solidifying layers by means of radiation, and different properties of the functional regions (7, 8, 9, 10, 11, 15, 16) are generated by variation of the radiation, wherein the construction material of the functional regions (7, 8, 9, 10, 15, 16) is identical in chemical composition, **characterized in that** the functional regions (7, 16) with load-bearing properties have greater strength than the functional regions (8, 9, 10, 15) which come into contact with the medium, and the hardness of the functional regions (8, 9, 10, 15) which come into contact with the medium is greater than the hardness of the functional regions (7, 16) with load-bearing properties.

2. Flow-guiding component according to Claim 1, **characterized in that** the construction material comprises metallic powder particles.

3. Flow-guiding component according to one of Claims 1 to 3, **characterized in that** the construction material comprises low-alloy and/or high-alloy steel powder particles.

4. Flow-guiding component according to one of Claims 1 to 4, **characterized in that** the functional regions (7, 8, 9, 10, 15, 16) form a one-piece component.

5. Flow-guiding component according to one of Claims 1 to 5, **characterized in that** different properties of the functional regions (7, 8, 9, 10, 15, 16) are produced by variation of the energy input.

6. Flow-guiding component according to one of Claims 1 to 6, **characterized in that** different properties of the functional regions (7, 8, 9, 10, 15, 16) are produced by variation of the intensity of the radiation.

7. Flow-guiding component according to one of Claims 1 to 7, **characterized in that** different properties of the functional regions (7, 8, 9, 10, 15, 16) are produced by variation of a scanning speed of the radiation.

8. Flow-guiding component according to one of Claims 1 to 8, **characterized in that** the functional regions (7, 8, 9, 10, 15, 16) have different structures.

9. Flow-guiding component according to one of Claims 1 to 8, **characterized in that** at least one functional region (7, 16) with load-bearing properties has a tensile strength of more than 600 MPa or more than 650 MPa or more than 700 MPa, and/or at least one functional region (8, 9, 10, 15) which comes into contact with the medium has a tensile strength of less than 600 MPa or less than 550 MPa or less than 500 MPa.

10. Flow-guiding component according to one of Claims 1 to 9, **characterized in that** at least one functional region (8, 9, 10, 15) which comes into contact with the medium has a hardness in HB of more than 250 or more than 300 or more than 350, and/or at least one functional region (7, 16) with load-bearing properties has a hardness in HB of less than 250 or less than 200 or less than 150.

11. Flow-guiding component according to one of Claims 1 to 10, **characterized in that** at least one functional region (7, 16) with load-bearing properties has an elongation at fracture of more than 10% or more than 15% or more than 20%, and/or at least one functional region (8, 9, 10, 15) which comes into contact with the medium has an elongation at fracture of less than 10% or less than 5% or less than 1%.

12. Method for producing a flow-guiding component according to one of Claims 1 to 11, comprising the following steps:
- application of a layer of a construction material to a plate,
- selective action of radiation on the layer,
- targeted variation of the radiation for creating functional regions (7, 8, 9, 10) in the component for the targeted generation of properties of the functional regions (7, 8, 9, 10).

## Revendications

1. Composant guidant l'écoulement, comprenant au moins une zone fonctionnelle (8) destinée au contact avec un milieu en écoulement et au moins une zone fonctionnelle (7) ayant des propriétés porteuses, dans lequel les zones fonctionnelles (7, 8, 9, 10, 15, 16) sont réalisées dans un matériau de construction par compactage successif de couches sous l'effet d'un rayonnement, et différentes propriétés des zones fonctionnelles (7, 8, 9, 10, 11, 15, 16) sont générées par variation du rayonnement, le matériau de construction des zones fonctionnelles (7, 8, 9, 10, 15, 16) étant identique en composition chimique,
**caractérisé en ce que** les zones fonctionnelles (7, 16) ayant des propriétés porteuses présentent une plus grande solidité que les zones fonctionnelles (8, 9, 10, 15) entrant en contact avec le milieu, et la dureté des zones fonctionnelles (8, 9, 10, 15) entrant en contact avec le milieu est supérieure à la dureté des zones fonctionnelles (7, 16) ayant des propriétés porteuses.

2. Composant guidant l'écoulement selon la revendication 1, **caractérisé en ce que** le matériau de construction comprend des particules de poudre métallique.

3. Composant guidant l'écoulement selon l'une quelconque des revendications 1 à 3, **caractérisé en ce que** le matériau de construction comprend des particules de poudre d'acier faiblement et/ou fortement allié.

4. Composant guidant l'écoulement selon l'une quelconque des revendications 1 à 4, **caractérisé en ce que** les zones fonctionnelles (7, 8, 9, 10, 15, 16) constituent un composant d'une seule pièce.

5. Composant guidant l'écoulement selon l'une quelconque des revendications 1 à 5, **caractérisé en ce que** différentes propriétés des zones fonctionnelles (7, 8, 9, 10, 15, 16) sont créées par variation de l'apport en énergie.

6. Composant guidant l'écoulement selon l'une quelconque des revendications 1 à 6, **caractérisé en ce que** différentes propriétés des zones fonctionnelles (7, 8, 9, 10, 15, 16) sont créées par variation de l'intensité du rayonnement.

7. Composant guidant l'écoulement selon l'une quelconque des revendications 1 à 7, **caractérisé en ce que** différentes propriétés des zones fonctionnelles (7, 8, 9, 10, 15, 16) sont créées par variation d'une vitesse de balayage du rayonnement.

8. Composant guidant l'écoulement selon l'une quelconque des revendications 1 à 8, **caractérisé en ce que** les zones fonctionnelles (7, 8, 9, 10, 15, 16) présentent différentes structures.

9. Composant guidant l'écoulement selon l'une quelconque des revendications 1 à 8, **caractérisé en ce qu'**au moins une zone fonctionnelle (7, 16) ayant des propriétés porteuses présente une résistance à la traction de plus de 600 MPa ou de plus de 650 MPa ou de plus de 700 MPa et/ou au moins une zone fonctionnelle (8, 9, 10, 15) entrant en contact avec le milieu présente une résistance à la traction de moins de 600 MPa ou moins de 550 MPa ou moins de 500 MPa.

10. Composant guidant l'écoulement selon l'une quelconque des revendications 1 à 9, **caractérisé en ce qu'**au moins une zone fonctionnelle (8, 9, 10, 15) entrant en contact avec le milieu présente une dureté en HB de plus de 250 ou plus de 300 ou plus de 350 et/ou au moins une zone fonctionnelle (7, 16) ayant des propriétés porteuses présente une dureté en HB de moins de 250 ou moins de 200 ou moins de 150.

11. Composant guidant l'écoulement selon l'une quelconque des revendications 1 à 10, **caractérisé en ce qu'**au moins une zone fonctionnelle (7, 16) ayant des propriétés porteuses présente un allongement à la rupture de plus de 10 % ou plus de 15 % ou plus de 20 % et/ou au moins une zone fonctionnelle (8, 9, 10, 15) entrant en contact avec le milieu présente un allongement à la rupture de moins de 10 % ou moins de 5 % ou moins de 1 %.

12. Procédé de fabrication d'un composant guidant l'écoulement selon l'une quelconque des revendications 1 à 11, comprenant les étapes suivantes consistant à :
- appliquer une couche d'un matériau de construction sur une plaque,
- faire agir sélectivement un rayonnement sur la couche,
- faire varier de manière ciblée le rayonnement pour générer des zones fonctionnelles (7, 8, 9, 10) dans le composant pour la génération ciblée de propriétés des zones fonctionnelles (7, 8, 9, 10).
